# EUROPÄISCHE PATENTSCHRIFT

(11) **EP 1 572 478 B1**
(45) Veröffentlichungstag und Bekanntmachung des Hinweises auf die Patenterteilung: **05.07.2006**
(21) Anmeldenummer: 03785722.4
(22) Anmeldetag: 03.12.2003
(51) Int. Cl.: B60H 1/00

(54) **VERFAHREN ZUR KLIMATISIERUNG EINES KRAFTFAHRZEUGS**
METHOD FOR AIR CONDITIONING A MOTOR VEHICLE
PROCEDE POUR CLIMATISER UN VEHICULE AUTOMOBILE

(30) Priorität: 20.12.2002 DE 10261179
(43) Veröffentlichungstag der Anmeldung: 14.09.2005
(73) Patentinhaber: DaimlerChrysler AG, 70567 Stuttgart (DE)
(72) Erfinder: CÄSAR, Roland, 70378 Stuttgart (DE); GÄRTNER, Jan, 70619 Stuttgart (DE); WERTENBACH, Jürgen, 70734 Fellbach (DE)
(86) Internationale Anmeldenummer: PCT/EP2003/013630
(87) Internationale Veröffentlichungsnummer: WO 2004/058526

(56) Entgegenhaltungen:
- EP-A- 1 112 871
- DE-A- 3 635 353
- DE-A- 10 129 290
- DE-A- 19 722 577
- DE-U- 20 121 533
- KAEFER O: "PKW-KLIMATISIERUNG - UMLUFTAUTOMATIK MIT FEUCHTEREGELUNG IM FAHRZEUGINNENRAUM" ATZ AUTOMOBILTECHNISCHE ZEITSCHRIFT, FRANCKH'SCHE VERLAGSHANDLUNG. STUTTGART, DE, Bd. 100, Nr. 6, 1. Juni 1998 (1998-06-01), Seiten 436-438,440,44, XP000765349 ISSN: 0001-2785

## Beschreibung

Die Erfindung betrifft ein Verfahren zur Klimatisierung eines Kraftfahrzeugs gemäß dem Oberbegriff des Patentanspruches 1.

Ein gattungsgemäßes Verfahren ist aus dem DE 201 21 533 U 1 bekannt. Dabei ist ein Wärmepumpensystem zur Beheizung eines Zuluftstromes eines Fahrgastinnenraumes eines Kraftfahrzeuges dargestellt, das einen Kältemittelkreislauf mit einem Verdichter, einem Kondensor, einem Drosselventil und einem Innenraumwärmetauscher beinhaltet. Der Luftstrom wird über den einen Verdampfer bildenden Innenraumwärmetauscher aufgeheizt. Zur Steuerung der dem Luftstrom zugeführten Wärme werden die Außentemperatur und der Feuchtegehalt am Verdampfer über einen Nässesensor messtechnisch erfasst. Wenn diese Temperatur und die Luftfeuchtigkeit in einem vordefinierten Bereich liegen, in dem der Verdampfer nass ist, wird der Kältemittelmassenstrom im Kreislauf vor dem Innenraumwärmetauscher derart gedrosselt wird, dass die im den Innenraumwärmetauscher passierenden Luftstrom enthaltene Feuchtigkeit am Innenraumwärmetauscher zumindest weitgehend kondensiert und die bereits am Wärmetauscher kondensierte Feuchtigkeit an diesem verbleibt. Alternativ kann der Fahrgastinnenraum von einer außerhalb des Kreislaufes befindlichen Wärmequelle, wie dem Motorkühlkreislauf aufgeheizt werden.

Des Weiteren ist in der DE 36 35 353 A1 beschrieben, dass zur schnellen Aufheizung eines Fahrgastinnenraums und zum Abtauen gefrorener oder beschlagener Scheiben die Klimaanlage im Wärmepumpenbetrieb laufen soll. Hierbei wird nach dem Kompressor der eigentliche Kondensator des Klimatisierungskreislaufes über eine Bypassleitung umgangen, wonach das erhitzte Kühlmedium den als Kondensor fungierenden Verdampfer passiert, der von einem in den Fahrgastinnenraum geleiteten Luftstrom durchsetzt wird. Das dort abgekühlte Kühlmedium nimmt anschließend Wärme von einem dritten als Verdampfer dienenden Wärmetauscher auf, der von der Kühlflüssigkeit der Brennkraftmaschine durchströmt wird. Bei Kaltstart des Motors und bei niedrigen Umgebungstemperaturen zwischen -10 und +10°C ist meistens Feuchtigkeit am Verdampfer kondensiert oder angeeist. Die in den Fahrgastinnenraum am Verdampfer vorbeiströmende Luft nimmt jedoch einen Teil der am Verdampfer befindlichen Feuchtigkeit auf und transportiert diese unter anderem an die Fensterscheiben des Kraftfahrzeugs, was für eine Zeitlang in unerwünschter Weise für Beschlag der Scheiben sorgt.

Der Erfindung liegt die Aufgabe zugrunde, ein gattungsgemäßes Verfahren dahingehend weiterzubilden, dass ein Beschlag der Fensterscheiben des Kraftfahrzeuges von vorneherein verhindert wird.

Die Aufgabe ist erfindungsgemäß durch die Merkmale des Patentanspruches 1 gelöst.

Aufgrund der messtechnischen Erfassung der Feuchte innerhalb des Fahrgastinnenraumes in Relation zur Innenraumtemperatur und der Verwendung einer bezüglich des Kältekreislaufes fremden Wärmequelle wird bei Erreichen eines Schwellwertes der Feuchte im Fahrgastinnenraum bei einer bestimmten Temperatur die Wärmequelle zur Beheizung des Fahrgastinnenraumes in Gang gesetzt. Gleichzeitig wird der Kältemittelmassenstrom durch den Verdampfer hindurch soweit gedrosselt, dass über den Verdampfer praktisch kein Wärmeeintrag in den Fahrgastinnenraum erfolgt. Dadurch bleibt das Kondensat am den Verdampfer bildenden Wärmetauscher bzw. die Zuluft zum Fahrgastinnenraum wird durch Kondensation am Verdampfer getrocknet. Die fremde Wärmequelle ersetzt quasi funktionell den Verdampfer zur Beheizung des Fahrgastinnenraumes. Erst, wenn ein bestimmtes Temperaturniveau im Fahrgastinnenraum erreicht ist, wird die fremde Wärmequelle abgekoppelt und die Drosselung des Kältemittelmassenstromes durch den Verdampfer hindurch aufgehoben. Somit wird eine Klimatisierung geschaffen, bei der bei niedrigen Temperaturen der Fahrgastinnenraum beheizt werden kann ohne dass ein Scheibenbeschlag auftritt. Das erfindungsgemäße Verfahren ist besonders für den Einsatz von CO₂ als Kältemittel aufgrund seiner gegenüber anderen Kältemittel überlegenen Verwendungsqualitäten im Wärmepumpenbetrieb infolge seiner physikalischen Eigenschaften bei dem gegebenen Druckniveau vorteilhaft.

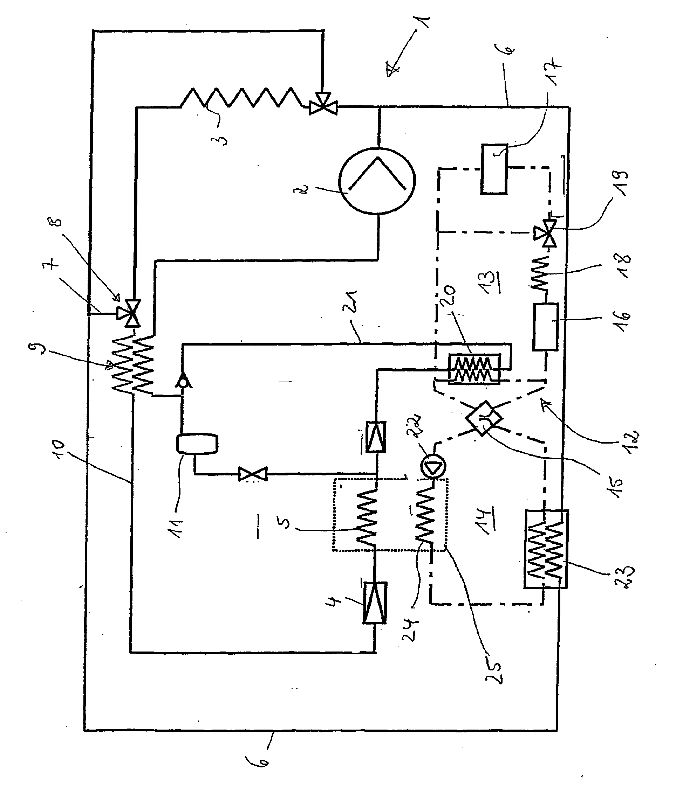

Zweckmäßige Ausgestaltungen der Erfindung können den Unteransprüchen entnommen werden; im übrigen ist die Erfindung anhand eines in den Zeichnungen dargestellten Ausführungsbeispieles nachfolgend näher erläutert; dabei zeigt die Figur schematisch einen Klimatisierungskreislauf eines erfindungsgemäßen Verfahrens mit einem Heizwärmetauscher als fremde Wärmequelle.

In der Figur ist ein Klimatisierungskreislauf 1 einer Klimaanlage eines Kraftfahrzeuges dargestellt, der sowohl für den Kühlbetrieb als auch für den Heizbetrieb eines Fahrgastinnenraums des Kraftfahrzeuges verwendbar ist. Die Grundkomponenten des Kreislaufes bestehen in einem Verdichter 2, einem Kondensator 3, einem Drosselventil 4 und einem als Innenraumwärmetauscher dienenden Verdampfer 5. Im Heizmodus wird der Kreislauf 1 auf Wärmepumpenbetrieb geschaltet, wonach das vom Verdichter 2 auf ein hohes Druckniveau verdichtete heiße Kältemittel - CO₂ - über eine Bypassleitung 6 am Kondensator 3 vorbeigeführt wird. Das heiße Kältemittel passiert nun eine an die Bypassleitung 6 angeschlossene Abzweigleitung 7 mit einem 3/2-Wegeventil 8, von dem aus es den Warmstromtrakt eines Gegenstromwärmetauschers 9 einer weiterführenden Leitung 10 durchströmt und einen kleinen Teil seiner Wärme an den kühlen Gegenstrom abgibt. Weiterhin durchströmt das noch relativ heiße Kältemittel das Drosselventil 4 und den nachfolgenden Verdampfer 5, der von der Zuluft zum Fahrgastinnenraum durchsetzt wird. Dabei gibt das Kältemittel zumindest einen Großteil seiner Wärme an den Luftstrom ab, der den Fahrgastinnenraum aufheizt. Das nun kalte Kältemittel fließt nun weiter über ein 2/2-Wegeventil zu einem Sammelbehälter 11, in dem verflüssigte Kältemittelanteile gespeichert werden, um Schäden am Verdichter 2 beim Ansaugen des Kältemittels zu vermeiden und als Reservoir bei höherem Bedarf an Kältemittel zu dienen. Nach dem Sammelbehälter 11 folgt der Kühlstromtrakt des Gegenstromwärmetauschers 9, in dem das kalte Kältemittel wieder etwas erwärmt wird, so dass es vollständig gasförmig vom anschließend folgenden Verdichter 2 angesaugt werden kann.

Neben dem geschilderten Klimatisierungskreislauf 1 ist das Fahrzeug mit einem Motorkühlkreislauf 12 ausgestattet. Dieser Kreislauf besteht aus zwei Abschnitten 13 und 14, welche über ein 4/2-Wegeventil 15 miteinander fluidisch gekoppelt sind. Während im Abschnitt 13 ein Motor 16, ein Kühler 17, ein Abgaswärmetauscher 18, ein Thermostatventil 19 sowie ein Wärmeaustauschtrakt eines Gegenstromwärmetauschers 20, wobei der Gegenpart des Traktes in einer hinter dem Verdampfer 5 abzweigenden Nebenleitung 21 des Kreislaufes 1 eingegliedert ist, angeordnet sind, ist der Abschnitt 14 mit einer Heizungspumpe 22, einem Wärmeaustauschtrakt eines Gegenstromwärmetauschers 23, welcher Trakt mit seinem in der Bypassleitung 6 angeordneten Gegenpart wärmetechnisch gekoppelt ist, und einem Heizungswärmetauscher 24 ausgestattet. Der Wärmetauscher 24 ist gemeinsam mit dem Verdampfer 5 in einem Klimakasten 25 der Klimaanlage angeordnet.

Im Fahrgastinnenraum wird des weiteren die Temperatur und zusätzlich die Luftfeuchtigkeit messtechnisch mittels geeigneter Sensoren erfasst, wobei die die Feuchtigkeit detektierenden Sensoren vorzugsweise an einer oder mehreren Fensterscheiben zugeordnet sind. Um einen Scheibenbeschlag bei niedrigen Temperaturen grundsätzlich zu verhindern, wird zuerst der Kreislauf 1 auf Wärmepumpenbetrieb geschaltet, wonach das heiße Kältemittel durch den Verdichter 2 über die Bypassleitung 6, die Abzweigleitung 7 und das Drosselventil 4 zum Verdampfer 5 gefördert wird, der vorerst durch den Luftstrom, der ihn durchsetzt und an den er einen großen Anteil an Wärme abgibt, den Fahrgastinnenraum aufheizt. Gleichzeitig jedoch überträgt das Kältemittel schon am Gegenstromwärmetauscher 23 des Kreislaufes 12 Wärme auf das Kühlmittel des Kreislaufes 12. Dieser ist in dieser Phase durch das 4/2-Wegeventil 15 so geschaltet, dass seine beiden Abschnitte 13 und 14 voneinander fluidisch wie auch hinsichtlich eines Wärmeübertrages völlig isoliert sind. Die Heizungspumpe 22 wälzt damit das Kühlmittel des Kreislaufes 12 lediglich im Abschnitt 14 um.

Wenn nun die Temperatur in einem vordefinierten Temperaturbereich liegt und die Luftfeuchtigkeit eine festgelegte Schwelle erreicht, wonach ein unzulässiger Scheibenbeschlag auftreten würde, wird das Drosselventil 4 durch die Temperatur- und Feuchtigkeitssensoren signaltechnisch so gesteuert, dass der Kältemittelmassenstrom im Kreislauf 1 vor dem Innenraumwärmetauscher 5 auf einen nur geringen Durchsatz gedrosselt wird. Dabei wird die im den Innenraumwärmetauscher 5 passierenden Luftstrom enthaltene Feuchtigkeit am Innenraumwärmetauscher 5 zumindest weitgehend kondensiert, während die bereits am Wärmetauscher 5 kondensierte Feuchtigkeit an diesem verbleibt. Das im Abschnitt 14 des Kühlkreislaufs 12 umlaufende Kühlmittel ist durch die Wärmeeinkopplung vom Kreislauf 1 über den Gegenstromwärmetauscher 23 nach der ersten Heizphase inzwischen aufgeheizt, wobei nun der Wärmetauscher 24 die anfängliche Rolle des Verdampfers 5 übernimmt und durch einen ihn durchsetzenden Luftstrom den Fahrgastinnenraum heizt. Dabei wird mittels des Wärmetauschers 24 der durch die Drosselung des Kältemittelmassenstromes vor dem Verdampfer 5 entstehende Heizleistungsverlust kompensiert und gleichzeitig durch den Verdampfer 5 die Luft des Fahrgastinnenraumes getrocknet.

Die Heizung des Fahrgastinnenraumes über den als Wärmequelle dienenden Wärmetauscher 24 erfolgt solange, bis die Temperatur im Fahrgastinnenraum eine obere Grenztemperatur des vordefinierten Temperaturbereiches überschreitet, ab der auch bei höherer Feuchtigkeit kein beschlagbildender Niederschlag an den Scheiben auftreten kann. Danach wird das Drosselventil 4 über die erwähnten Sensoren wieder aufgesteuert, so dass der Kältemittelmassenstrom im Kreislauf 1 derart zunimmt, dass der Fahrgastinnenraum über den Verdampfer 5 ausreichend geheizt werden kann. Der Heizungswärmetauscher 24 wird in - seiner Funktion niederrangig, wenn nicht gar bedeutungslos und gegebenenfalls mit Luft nicht mehr durchsetzt.

Die in den Kreislauf weiterhin eingekoppelte Wärme kann nun gänzlich zur Aufwärmung des Motors 16 und des Kühlers 17 verwandt werden, wobei das 4/2-Wegeventil 15 entsprechend geschaltet wird und die beiden Kreislaufabschnitte 13 und 14 dabei fluidisch miteinander verbunden werden.

Es ist zwar denkbar, den Fahrgastinnenraum von einer anderen außerhalb des Kreislaufes 1 befindlichen Wärmequelle aufzuheizen, jedoch ist die Verwendung des Heizungswärmetauschers 24 des sowieso schon vorhandenen Motorkühlkreislaufes 12 als Wärmequelle unter Bauraumaspekten von erheblichem Vorteil.

Des weiteren ist es auch möglich, den Kreislauf 12 ohne 4/2-Wegeventil 15 vorzusehen, wodurch die Abtrennbarkeit der beiden Kreislaufabschnitte 13 und 14 voneinander entfällt. Dies führt zwar zu einer baulichen Vereinfachung des Motorkühlkreislaufes 12, jedoch verteilt sich die in diesen Kreislauf 12 aus dem Kreislauf 1 eingekoppelte Wärme nicht nur auf den Abschnitt 14 sondern auf den gesamten Kreislauf 12, was eine wesentlich langsamere und schlimmstenfalls ungenügende Aufheizung des Fahrgastinnenraums zur Folge hat. Ebenfalls ist denkbar, auf den Gegenstromwärmetauscher 23 zu verzichten, was wiederum eine bauliche Vereinfachung bedeutet. Hierbei gibt es zwischen den beiden Kreisläufen 1 und 12 nur noch die Kopplung über den Gegenstromwärmetauscher 20, der allerdings keine Auswirkung auf die Aufheizung des Fahrgastinnenraums besitzt. In diesem Falle findet jedoch solange keine Aufheizung des Fahrgastinnenraums statt, wie der Motor kalt ist. Eine schnelle Motorerwärmung wird im wesentlichen bei kleineren Motorvarianten erzielt, so dass lediglich bei diesen Ausführungen eine halbwegs ausreichend komfortable Aufheizung des Fahrgastinnenraumes erwartet werden kann. Demgegenüber kann in einfacher Weise bei der Anordnung des Gegenstromwärmetauschers 23 die Verdichterleistung genutzt werden, um schnell und komfortabel den Fahrgastinnenraum aufzuheizen.

Des weiteren wird die Aufheizung des Fahrgastinnenraumes hinsichtlich Effizienz und Geschwindigkeit verbessert, wenn die Klimaanlage auf Umluft schaltet und somit die Frischluftzufuhr unterbunden wird. Das Kältemittel gibt dabei im Gegenstromwärmetauscher 23 seine Wärme ab und wird im Drosselventil 4 auf einen mit einer Temperatur korrelierenden Druck derart gedrosselt, dass die Temperatur an der Oberfläche des Innenraumwärmetauschers 5 unterhalb derjenigen Taupunkttemperatur, die zum Scheibenbeschlag führt, liegt.

## Patentansprüche

1. Verfahren zur Klimatisierung eines Kraftfahrzeugs, wobei dessen Fahrgastinnenraum in einem Heizmodus durch Wärmepumpenbetrieb eines aus einem Verdichter (2), einem Kondensor (3), einem Drosselventil (4) und einem Innenraumwärmetauscher (5) bestehenden Kältekreislaufes (1) über den einen Verdampfer bildenden Innenraumwärmetauscher (5) aufgeheizt wird, wobei eine Temperatur messtechnisch erfasst wird und, wenn diese Temperatur und die Luftfeuchtigkeit in einem vordefinierten Bereich liegen, in dem der Verdampfer nass ist, der Kältemittelmassenstrom im Kreislauf (1) vor dem Innenraumwärmetauscher (5) derart gedrosselt wird, dass die im den Innenraumwärmetauscher (5) passierenden Luftstrom enthaltene Feuchtigkeit am Innenraumwärmetauscher (5) zumindest weitgehend kondensiert und die bereits am Wärmetauscher (5) kondensierte Feuchtigkeit an diesem verbleibt, und wobei der Fahrgastinnenraum von einer außerhalb des Kreislaufes (1) befindlichen Wärmequelle aufgeheizt wird,
**dadurch gekennzeichnet,**
**dass** sowohl die Temperatur als auch die Luftfeuchtigkeit im Fahrgastinnenraum messtechnisch erfasst werden, und dass der Fahrgastinnenraum nur von einer außerhalb des Kreislaufes (1) befindlichen Wärmequelle (24) aufgeheizt wird, bis die Temperatur im Fahrgastinnenraum eine obere Grenztemperatur des vordefinierten Bereiches überschreitet.

2. Verfahren nach Anspruch 1,
**dadurch gekennzeichnet,**
**dass** der Fahrgastinnenraum durch einen als Wärmequelle dienenden Heizungswärmetauscher (24) eines Motorkühlkreislaufes (12), der mit erwärmtem Motorkühlmittel durchflossen und mit einem in den Fahrgastinnenraum führenden Luftstrom durchsetzt wird, aufgeheizt wird.

3. Verfahren nach Anspruch 2,
**dadurch gekennzeichnet,**
**dass** bis zur Drosselung des Kältemittelmassenstromes im Kältekreislauf (1) sowohl das Kältemittel als auch das Motorkühlmittel mittels des in der Wärmepumpe wirkenden Verdichters (2) des Kältekreislaufes (1) erwärmt wird, wobei Wärme aus dem Kältekreislauf (1) über einen Gegenstromwärmetauscher (23) ausgekoppelt und auf das Motorkühlmittel übertragen wird.

4. Verfahren nach Anspruch 3,
**dadurch gekennzeichnet,**
**dass** die Wärme lediglich auf das Motorkühlmittel eines ersten eine Heizungspumpe (22) und den Heizungswärmetauscher (24) beinhaltenden Abschnitt (14) des Motorkühlkreislaufes (12) übertragen wird, wobei ein zweiter Kreislaufabschnitt (13), der den Motor (16) und den Kühler (17) beinhaltet, von dem ersten Kreislaufabschnitt (14) fluidisch abgekoppelt wird.

5. Verfahren nach einem der Ansprüche 3 oder 4,
**dadurch gekennzeichnet,**
**dass** beim Aufheizen die Klimaanlage auf Umluft geschaltet wird, wobei das Kältemittel im Gegenstromwärmetauscher (23) seine Wärme abgibt und im Drosselventil (4) auf einen mit einer Temperatur korrelierenden Druck derart gedrosselt wird, dass die Temperatur an der Oberfläche des Innenraumwärmetauschers (5) unterhalb derjenigen Taupunkttemperatur, die zum Scheibenbeschlag führt, liegt.

## Claims

1. Method of air conditioning a motor vehicle, whereby in a heating mode, its passenger compartment is heated on the basis of a heat pump mode of a cooling circuit (1) comprising a compressor (2), a condenser (3), a throttle valve (4) and an interior heat exchanger (5) via the interior heat exchanger (5) forming an evaporator, and a temperature is detected by measuring technology and if this temperature and the air humidity lie within a predefined range in which the evaporator is wet, the coolant mass flow in the circuit (1) upstream of the interior heat exchanger (5) is throttled so that the moisture contained in the air flow passing through the interior heat exchanger (5) is at least largely condensed on the interior heat exchanger (5) and the moisture already condensed on the heat exchanger (5) remains on it, and the passenger compartment is heated by a heat source disposed externally to the circuit (1),
**characterised in that**
both the temperature and the air humidity in the passenger compartment are detected by a measuring technique and the passenger compartment is heated solely by a heat source (24) disposed externally to the circuit (1) until the temperature in the passenger compartment exceeds an upper threshold temperature of the predefined range.

2. Method as claimed in claim 1,
**characterised in that**
the passenger compartment is heated by means of a heating heat exchanger (24) of an engine cooling circuit (12) serving as a heat source, through which heated engine coolant circulates and through which an air flow leading into the passenger compartment circulates.

3. Method as claimed in claim 2,
**characterised in that**,
until the coolant mass flow in the cooling circuit (1) is throttled, both the coolant and the engine coolant are heated by means of the compressor (2) of the cooling circuit (1) acting in the heat pump, and heat is harnessed from the cooling circuit (1) via a counter-flow heat exchanger (23) and transmitted to the engine coolant.

4. Method as claimed in claim 3,
**characterised in that**
the heat is transmitted solely to the engine coolant of a first portion (14) of the engine cooling circuit (12) containing a heating pump (22) and the heating heat exchanger (24), and a second circuit portion (13) containing the engine (16) and the cooler (17) is uncoupled from the first circuit portion (14) in terms of flow communication.

5. Method as claimed in one of claims 3 or 4,
**characterised in that**,
during heating, the air conditioning system is switched to closed circulation, during which the coolant disperses its heat in the counter-flow heat exchanger and is throttled in the throttle valve (4) to a pressure correlating to a temperature so that the temperature at the surface of the interior heat exchanger (5) lies below the dew point temperature which leads to misting of the windows.

## Revendications

1. Procédé de climatisation d'un véhicule automobile, dont l'habitacle de véhicule est chauffé, dans un mode de chauffage, par le fonctionnement d'une pompe à chaleur d'un cycle frigorifique constitué d'un compresseur (2), d'un condenseur (3), d'un étrangleur (4) et d'un échangeur de chaleur d'habitacle (5), via l'échangeur de chaleur d'habitacle (5) formant un évaporateur, une température étant enregistrée mécaniquement et, lorsque cette température et l'humidité de l'air se trouvent dans une plage prédéfinie dans laquelle l'évaporateur est mouillé, le débit massique du réfrigérant dans le circuit (1) est étranglé avant l'échangeur de chaleur d'habitacle (5) de telle sorte que l'humidité contenue dans le flux d'air passant dans l'échangeur de chaleur d'habitacle (5) est condensée au moins en majeure partie au niveau de l'échangeur de chaleur d'habitacle (5) et l'humidité déjà condensée au niveau de l'échangeur de chaleur (5) reste au niveau de celui-ci, l'habitacle du véhicule étant chauffé par une source de chaleur située à l'extérieur du circuit (1), **caractérisé en ce que** la température et l'humidité de l'air dans l'habitacle du véhicule sont toutes deux enregistrées à l'aide de mesures techniques, et l'habitacle du véhicule est chauffé uniquement par une source de chaleur (24) située à l'extérieur du circuit (1), jusqu'à ce que la température dans l'habitacle du véhicule ait dépassé une température limite supérieure de la plage prédéfinie.

2. Procédé selon la revendication 1, **caractérisé en ce que** l'habitacle du véhicule est chauffé par un échangeur de chaleur de chauffage (24) servant de source de chaleur d'un circuit de refroidissement du moteur (12) qui est traversé par du liquide de refroidissement du moteur chauffé et par un flux d'air conduisant dans l'habitacle du véhicule.

3. Procédé selon la revendication 2, **caractérisé en ce que** jusqu'à l'étranglement du flux massique de réfrigérant dans le cycle frigorifique (1), à la fois le réfrigérant et le liquide de refroidissement du moteur sont chauffés à l'aide du compresseur (2) du cycle frigorifique (1) agissant dans la pompe à chaleur, la chaleur provenant du cycle frigorifique (1) étant découplée via un échangeur de chaleur à flux inverse (23) et étant transmise au liquide de refroidissement du moteur.

4. Procédé selon la revendication 3, **caractérisé en ce que** la chaleur est transmise uniquement au liquide de refroidissement du moteur d'une première section (14) du circuit de refroidissement du moteur (12) contenant une pompe de chauffage (22) et l'échangeur de chaleur de chauffage (24), une deuxième section de circuit (13), qui contient le moteur (16) et le refroidisseur (17), étant découplée fluidiquement de la première section de circuit (14).

5. Procédé selon l'une des revendications 3 ou 4, **caractérisé en ce que** lors du chauffage de l'installation de climatisation, on passe en mode d'air recyclé, le réfrigérant présent dans l'échangeur de chaleur à flux inverse (23) dégageant alors sa chaleur et étant étranglé dans l'étrangleur (4) à une pression correspondant à une certaine température de telle sorte que la température à la surface de l'échangeur de chaleur d'habitacle (5) est inférieure à la température du point de rosée qui conduit à la formation de buée sur les vitres.
